# EUROPEAN PATENT APPLICATION

(11) **EP 2 164 231 A1**
(43) Date of publication of application: **17.03.2010**
(21) Application number: 08016223.3
(22) Date of filing: 15.09.2008
(51) Int. Cl.: H04L 29/08, G06F 17/30

(54) **Mobile phone optimized online communication**

(71) Applicant: Jentro Technologies GmbH, 81671 München (DE)
(72) Inventor: Hempel, Erno, 81479 München (DE)
(74) Representative: Müller-Boré & Partner Patentanwälte

(57) **Abstract**

The present description refers in particular to a computer-implemented method (200), computer program product and computer system for checking updates of requested data when performing a data request across a network. The computer-implemented method may comprise:
receiving (210,220) a data request from a client (10) at a proxy (20), the data request comprising at least one address of at least one server (40) and first hash data, wherein the first hash data are at least partially computed from first response data retrieved from the at least one server prior to the data request;
in answer to the data request, receiving (230,232) second response data from the at least one server at the proxy;
computing (234) second hash data from the second response data at the proxy; and
comparing (250) the first hash data with the second hash data at the proxy:
if the second hash data are equal to the first hash data, then transmit (260) a null value to the client;
else if the second hash data differ from the first hash data, then transmit (260) the second response data and the second hash data to the client.

## Description

### Technical Field

The description is directed generally to network communication, particularly to optimized online communication, and more particularly to a computer-implemented method, computer system and computer program product for checking updates of requested data when performing a data request across a network.

### Background

Wireless online communication becomes more and more important, e.g. to download services and/or data on a mobile device such as a handset, a mobile phone, a handheld and/or a PDA from a remote server hosting the services and/or data. Examples of said services may be to determine a nearest gas station or another point of interest (POI) and/or the latest weather forecast. Wireless online communication may be implemented by distributed client-server architectures. In order to establish said online communication between a client (e.g. a mobile device) and at least one server, the mobile device has to register and/or to connect to a wireless network prior to perform any TCP/IP transmission over the network. Connecting to a wireless network may be realized by use of a connection protocol such as HTTP(S).

However, wireless communication between a client and a server may be relatively slow, expensive (regarding time and costs), not very effective and unreliable. Furthermore, HTTP may have a large overhead regarding headers, etc. compared to data load transmitted. In several applications, once a connection between a client and a server is established, the connection remains open until a communication is terminated. Said communication may comprise data requests, downloads of services and/or data retrieved by requests and responses exchanged between a client and a server. Compared to network communication between a client and a server, communication between servers is less expensive and more effective.

Accordingly, there is a need to provide methods and systems that would save data transmission volume for clients, in particular, in a wireless environment where e.g. mobile devices are used. Costs for end-users as well as network load for a wireless network operator (i.e. a mobile device) should also be reduced. Furthermore, it would be desirable to perform multiple requests and corresponding responses between the mobile device and the server faster, and therewith to enhance a user experience. Preferably an API would further support splitting up the responses properly.

### Summary

In one general aspect, a computer-implemented method for checking updates of requested data when performing a data request across a network is provided. The method may comprise:
receiving a data request from a client at a proxy, the data request comprising at least one address of at least one server and first hash data, wherein the first hash data are at least partially computed from first response data retrieved from the at least one server prior to the data request (and/or the first hash data may be pre-loaded on the mobile device);
in answer to the data request receiving second response data from the at least one server at the proxy;
computing second hash data from the second response data at the proxy; and
comparing the first hash data with the second hash data at the proxy:
   if the second hash data are equal to the first hash data, then transmit a null value to the client;
   else if the second hash data differ from the first hash data, then transmit the second response data and the second hash data to the client.

A data request or request from a client (e.g. a mobile device) to a server may be processed through a communication proxy or proxy. The terms communication proxy and proxy are used interchangeable through the following text as well as the terms data request and request. The data request may comprise one or more addresses of at least one server (e.g. one or more URLs). For example, a data request may comprise a bundle of two or more addresses. Furthermore, the data request may comprise at least one set of hash data, e.g. first hash data corresponding to a first address. The first hash data may be computed from a prior data request comprising the first address. Said prior data request has been performed prior to the data request comprising the first hash data. In other words, the first hash data are computed from first response data retrieved in response to the prior data request from the server.

In order to determine whether the first response data need to be updated, the proxy computes second hash data from second response data retrieved in response to the data request with regard to the first address. The first response data are retrieved at the client from the server through the prior data request and are stored on the client. Only in case the second hash data vary or differ from the first hash data, the first response data need to be updated by the second response data on the client. Consequently, costs for an end-user and network load are reduced, since only in case of an update or modification data need to be exchanged between the client and server. Hence, man-machine interaction is improved, in particular, by releasing a user from the mental and cumbersome task to always retrieve data from a server already stored on the client, even if the data has not been changed. Therefore, overall efficiency of wireless online communication is improved.

Furthermore, complex and often even not practicable versioning of data retrievable from the server in order to determine whether requested data must be reloaded on the client is not necessary. Rather, hash data relating to already downloaded data need to be transmitted along with a data request.

Furthermore, depending on the data request, the proxy may transmit the second response data and corresponding second hash data in one or more bundles to the client. For example, if the data request of the client comprises an important part and a less important part, response data corresponding to the important part may be directly, without any temporal delay processed and sent to the client, whereas the response data corresponding to the less important part may be processed and transmitted by the proxy at a later time. Important may related to the relevance of the data for the client at a particular point in time. An importance level may be associated with at least a part of a data request by the client. In an other exemplary aspect, an importance level for at least a part of requested data may be automatically determined and assigned to the corresponding data of the data request by the client depending on the content of the data request.

According to another aspect, the first hash data may comprise a first checksum calculated from at least a portion of content data of the first response data, and the second hash data may comprise a second checksum calculated from at least a portion of content data of the second response data.

The hash data may be computed from response data by calculating a checksum of at least a portion of the content or content data of the response data. Consequently, the hash data apply the content while being independent from the cognitive content of the response data. Only a portion or all of the content data may be used to calculate the checksum. The content of the response data is not evaluated and/or analyzed for this purpose. Examples, of calculating the checksum may be to count the number of characters and/or words comprised in the response data. Consequently, versioning of the response data themselves at the server is not necessary. Rather by computing hash data, response data downloaded to the client is versioned from outside.

According to yet another aspect, the data request may further comprise a cache-time for the at least one address.

According to yet another aspect, the method may further comprise:
after receiving the data request at the proxy, verifying storage of the at least one address in a data storage device coupled to the proxy and checking the cache-time:
   if the at least one address is found in the data storage device and if the cache-time is not outdated, then transmit the null value to the client,
   else if the at least one address is not found or if the cache-time is outdated, then in answer to the data request further performing the step of storing the second hash data in the data storage device and updating the cache-time for the at least one address.

In addition to the updating functionalities according to the above method, caching of already downloaded server addresses at the proxy is supported. In this way, server-side communication between the proxy and the server is improved and optimized. In particular, the proxy may only need to retrieve data from a server being addressed in the data request if a cache-time for the address is outdated, i.e. if a last access to the address is older than a pre-defined cache-time. The cache-time may dependent on the requested data. For example, a weather forecast service might be associated with a shorter cache-time than a POI service for a navigation system.

According to yet another aspect, a time-stamp may be determined by the server indicating whether data corresponding to the first address is still valid or outdated.

According to yet another aspect, the method may further comprise:
comparing the cache-time with the time-stamp; and
re-loading corresponding data from the server on the proxy if the time-stamp is older than the cache-time.

The cache-time may be associated with the client in order to determine a time when the last update of data retrieved from a server has been performed. Furthermore, a time-stamp may be associated with data from the server. The time-stamp may be proved by the server for the data in order to determine an actuality of the data stored or located on the server. Consequently, when performing a request from the client, the proxy may compare the cache-time of the client for requested data with a time-stamp of the server for said data. If the time-stamp is newer than the cache-time, then the data is re-loaded from the server to the client, because the data is considered to be outdated. Otherwise, the data on the client is not outdated and thus may not be updated.

According to yet another aspect, the cache-time may be configured by an application running on the client.

According to yet another aspect, the first address and the first hash data may be automatically combined with a user request against the server by an application running on the mobile device.

Accordingly, an update of the first response data is automatically sent as an update request to the server from an application running on the mobile device whenever a user formulates a user request against the server or against another server. Consequently, an update request may be automatically performed together with a user request. In order to process the user request, a server connection needs to be established from the mobile device in any case. This connection is then used by the mobile device to automatically perform required update requests. Consequently, data transmission volume and therefore costs for the user are reduced. Furthermore, data updates on the client are performed more efficiently.

According to yet another aspect, the first hash data may be pre-loaded in the mobile device

In another general aspect there is provided a computer-program product comprising computer readable instructions, which when loaded and run in a computer system and/or computer network system, cause the computer system and/or the computer network system to perform a method as described.

The subject matter described in this specification can be implemented as a method or as a system or using computer program products, tangibly embodied in information carriers, such as a CD-ROM, a DVD-ROM, a semiconductor memory, and/or a hard disk or embodied as a signal and/or data stream. Such computer program products may cause a data processing apparatus to conduct one or more operations described in this specification.

According to yet another aspect, a computer-implemented method for checking updates of requested data when performing a data request across a network is provided. The method may comprise:
sending a data request from a client to a server via a proxy, the data request comprising at least one address of at least one server and first hash data, wherein the first hash data are at least partially computed from first response data retrieved from the at least one server prior to the data request;
in answer to the data request,
   if second hash data are equal to the first hash data, then receiving a null value at the client;
   else if the second hash data differ from the first hash data, then receiving second response data and the second hash data at the client,
wherein the second response data are retrieved from the at least one server at the proxy;
the second hash data are computed from the second response data at the proxy; and
the first hash data are compared with the second hash data at the proxy.

In yet another general aspect, a computer system for checking updates of requested data when performing a data request across a network is provided. The system may comprise:
a proxy operable to:
   receive a data request from a client, the data request comprising at least one address of at least one server and first hash data, wherein the first hash data are at least partially computed from first response data retrieved from the at least one server prior to the data request (and/or the first hash data may be pre-loaded on the mobile device);
   in answer to the data request receive second response data from the at least one server;
   computing second hash data from the second response data; and
   comparing the first hash data with the second hash data:
      if the second hash data are equal to the first hash data, then transmit a null value to the client;
      else if the second hash data differ from the first hash data, then transmit the second response data and the second hash data to the client.

According to yet another aspect, the system is further operable to perform operations according to any one of the above methods.

According to yet another aspect, a computer system for checking updates of requested data when performing a data request across a network is provided. The system may comprise:
a client operable to:
   send a data request to a server via a proxy, the data request comprising at least one address of at least one server and first hash data, wherein the first hash data are at least partially computed from first response data retrieved from the at least one server prior to the data request;
   in answer to the data request,
      if second hash data are equal to the first hash data, then receive a null value;
      else if the second hash data differ from the first hash data, then receive second response data and the second hash data,
wherein the second response data are retrieved from the at least one server at the proxy;
the second hash data are computed from the second response data at the proxy; and
the first hash data are compared with the second hash data at the proxy.

In addition, the subject matter described in this specification can also be implemented as a system including a processor and a memory coupled to the processor. The memory may comprise one or more programs that cause the processor to perform one or more of the method acts described in this specification.

Details of one or more implementations are set forth in the accompanying exemplary drawings and exemplary description below. Other features will be apparent from the description and the drawings, and from the claims.

### Brief Description of the Drawings

Figure 1 shows an exemplary computer-implemented method to perform requests and/or responses from mobile devices to remote servers subsequently in any order and/or (substantially) in parallel.
Figure 2 shows an exemplary computer-implemented method to perform requests and/or responses from mobile devices to remote servers, whereby subsequently in any order and/or (substantially) in parallel updates are checked.
Figure 3 shows an exemplary computer-implemented method to perform requests and/or responses, whereby subsequently in any order and/or (substantially) in parallel updates are checked using caches.
Figure 4 shows an exemplary computer (network) system.

### Detailed Description

In the following text, a detailed description of examples and/or example implementations will be given with reference to the drawings. It should be understood that various modifications to the examples may be made. In particular, elements of one example may be combined and used in other examples to form new examples.

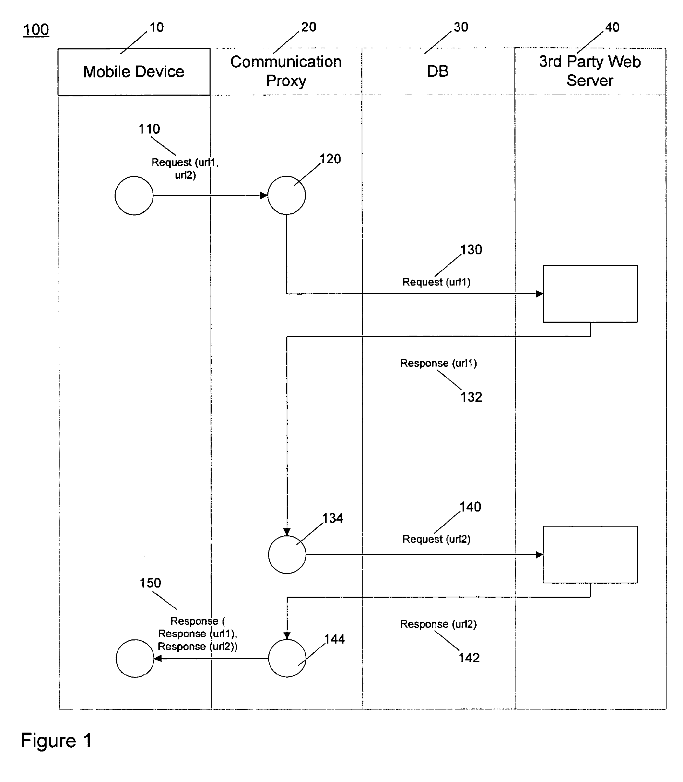

**Figure 1** shows an exemplary implementation of a computer-implemented method 100 combining requests and responses exchanged between a client 10 and a server 40 through wireless network communication.

Possibly wireless network communication may be performed between a mobile device 10 such as a handset, a mobile phone, a handheld and/or a PDA and a server 40 such as a (third party) web server. The communication between the mobile device 10 and the server 40 may be performed and/or scheduled through a proxy 20. In terms of a client-server architecture for implementing the addressed components, the mobile device 10 may be client-side whereas the proxy 20 and the server 40 may be server-side. The proxy 20 may be configured on the client 10 by a user. Furthermore, the proxy 20 may be coupled to a data storage device 30 such as a data base. In general, client-server communication in a web architecture (e.g. between the mobile device 10 and the server 40 through the proxy 20) is much more costly and time-consuming than server-side communication e.g. between the proxy 20 and the web server 40.

Hence, in order to save data transmission volume and therefore costs for a user of the mobile device 10 as well as network load for the mobile device, the method 100 of Fig. 1 may comprise one or more of the following steps:

At 110, one or more data requests are combined or bundled on the mobile device 10. The data requests may be performed through an application (e.g. web application) such as a browser on the mobile device 10. The data request may comprise an address such as a GET, POST, CGI, URL, URI, and/or URN addressing at least one server 40. The server 40 may host at least one service and/or data. Data requests may be bundled by bundling one or more addresses. Bundling of data requests at the mobile device 10 may be performed by one or more criteria. In one exemplary implementation, one or more objective bundling criteria are used. Examples of objective bundling criteria may comprise a pre-defined time out, a pre-defined number of requests to be bundled and/or a user session. In another exemplary implementation, requests are bundled based on semantic bundling criteria specifying whether they are semantically related (e.g. concerning a requests topic or a single addressed server). For example, a user may request a list of cities as well as particular categories such as the current weather forecast and/or a program for the movies relating to one of the cities in the city list. In yet another exemplary implementation, bundling of requests may be based on a combination of one or more objective bundling criteria and one or more semantic bundling criteria. In yet another exemplary implementation, the web application may be provided with interaction means such as a button or an interactive input box. By activating the interaction means, a user may specify that all requests formulated prior to said activation should be bundled. After one or more requests are bundled to a single data request, a HTTP header is imposed on the bundled or combined data request.

At 120, the bundled data request is transmitted from the mobile device 10 to the proxy 20 within one single data request. In this way, transmission volume, network load and therefore costs for a user of the mobile device 10 are saved. Furthermore, multiple data requests and corresponding responses can be performed faster and more efficient. Therefore, a user experience is also enhanced.

After having received the bundled request at the proxy 20, the proxy 20 performs each of the data requests comprised in the bundled request subsequently or (substantially) in parallel. Each of the data requests is transmitted to the server 40 (e.g. requests 130 and 140) and the proxy 20 receives corresponding responses from the server 40 (e.g. corresponding responses132 and142, respectively).

At 134 and 144, respectively the proxy collects the corresponding responses from the server 40 on the proxy 20. After having received all responses relating to the data requests in the bundled request, the proxy 20 bundles at least some of the responses.

Subsequently, at 150, the proxy 20 transmits the combined or bundled responses in one response to the mobile device 10. In one exemplary implementation, the web application of the mobile device comprises an API. The API may support splitting up the responses in the received (bundled) response properly depending on each of the requests.

Further in many web applications running on a mobile device 10, data requests to a server 40 have to be made to update data stored on the mobile device 10 and which has been requested in earlier data requests from a server 40. For example, a navigation system may need to update a POI list, a city map and/or information on traffic jams from time to time.

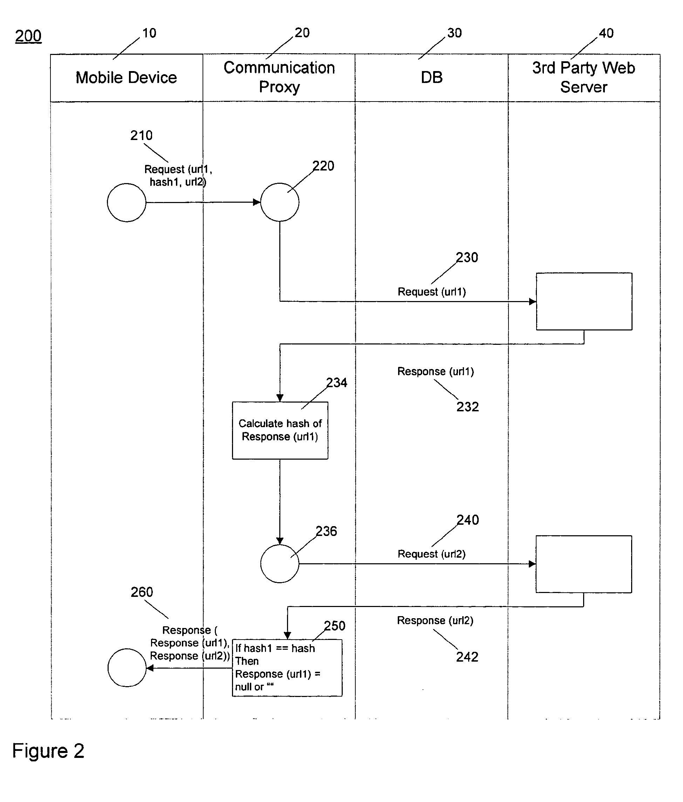

Updating data from a server 40 on a client 10 may be performed in different ways. In one example, a data update may be retrieved always fresh from a server 40. In another example, a data update may be performed upon a user activates update means offered with the mobile device 10. In yet another example, an update of data on the client 10 is always automatically performed after a user-defined time period. In yet another example, data, which need to be updated from time to time may be cached on the mobile device 10, i.e. may be pre-loaded on the mobile device 10. Hence, for a first time said data is loaded on the mobile device 10 from at least one server 40. Subsequently, the data is stored on the mobile device 10 after having loaded said data for a first time. An update-request for said data may be then piggybacked to a data request from the mobile device 10 to a server 40, wherein the request itself needs to be retrieved fresh from the server 40 anyhow. Such an exemplary client-side update functionality coupled to a data request is shown with reference to **Figure 2****.**

The method 200 shown in Fig. 2 may comprise one or more of the following steps:
At 210, a data request against at least one server 40 is performed at a mobile device 10. The data request comprises at least a first address (e.g. a URL) addressing a server 40, first hash data and possibly at least one further address addressing the server 40 or another server. The first hash data may relate to the first address and/or first response data retrieved from said addressed server 40 prior to the request. The first hash data may refer to data loaded on the mobile device 10, which need to be updated from time to time. The first hash data is computed from response data retrieved at the mobile device 10 prior to said request. Alternatively, the first hash data is pre-loaded on the mobile device 10. Computing the first hash data from the response data may comprise calculating a checksum from at least one set of content data comprised in the response data.

In one example, the first hash data may be computed by a checksum function and/or by a hash function.

A hash function may be any well-defined procedure or mathematical function for turning some kind of data into a relatively small integer. Values returned by a hash function may be called hash data. Hash functions may relate to checksums, check digits and/or randomizing functions.

A checksum function may comprise method steps for calculating a checksum of at least a portion of the content of said first response data. The content of said first response data is however neither evaluated nor analyzed in order to calculate the checksum. The checksum may be rather calculated, e.g. by counting a number of characters comprised in the content of said first response data, by counting a number of words comprised in the content of said first response data, by counting a number of paragraphs comprised in the content of said first response data, and/or by counting a number of headlines comprised in the content of said first response data. The cache-time may be determined by an application running on the mobile device 10. For example, content relating to weather data may have a different cache-time than content relating to a city list or a list of gas stations.

Accordingly, a checksum and/or hash data may be used to determine a new version of data retrieved from the server 40 and/or a difference between an older and a newer version of data retrieved from the server 40.

In other words, the first hash data may be independent from cognitive data and may refer to parts or all of the first response data. Furthermore, the first hash data may be computed from the first response data without evaluating the content of the first response data. In one aspect, the first hash data may be considered to specify a version of the first response data which is however not comprised in the first response data themselves but rather added to the first response data from outside by calculating a checksum of at least a portion of the content data of the first response data.

At 220, the data request comprising at least one address of at least one server 40 and the first has data is retrieved at a proxy 20. The proxy performs (230) at least a first request comprised in the data request against the server 40 and retrieves (232) corresponding second response data.

The first response data and the second response data may refer to (substantially) the same data request against a server 40, e.g. requesting a POI list and/or a city map of a navigation system running on the mobile device 10. The data request is however performed at different times. Consequently, the second response data may comprise content not comprised in the first response data, for example. Hence, the first response data, which may be stored on the mobile device 10, need to be updated.

At 234, the proxy 20 computes from the second response data second hash data. The second hash data may be calculated from at least a portion of the second response data using (substantially) the same checksum function used to compute the first hash data from the first response data. The second hash data and the second response data are collected at the proxy (236).

In case the data request comprises more at least one further address, the proxy performs the further requests against the server 40 in a similar way the first request has been performed (240, 242).

At 250, the proxy compares the first hash data with the second hash data. Said comparison is performed in order to determine whether at least a portion of the requested data needs to be updated on the mobile device 10. In case the second hash data are equal to the first hash data, i.e. no new version of the corresponding response data is available, the response data need not to be updated on the mobile device 10. Consequently, only a null value, an empty string, or a code section indicating that no update is necessary is transmitted from the proxy 20 to the mobile device 10 in response to the data request. In other words, the first response data remain the latest version on the mobile device 10. Otherwise, if the second hash data differ from the first hash data and hence, the requested response data are updated, an updated version, i.e. the corresponding second response data are transmitted to the mobile device (260). The second response data then replace at least a part of the first response data for the application on the mobile device 10. In other words, the first response data are updated by at least a part of the second response data.

In one example, an update of the first response data is automatically sent as an update request to the server 40 from an application running on the mobile device 10 whenever a user formulates a data request against the server 40 or against another server. Consequently, an update request may be automatically performed together with a user request. In order to process the user request, a server connection needs to be established from the mobile device 10 in any case. This connection is then used by the mobile device 10 to automatically 10 perform required update requests. In this example, the data request comprises a first address and first hash data relating to the update request and at least a second address specifying the user request. The second address is processed by through the proxy by transmitting the corresponding request to the addressed server 40 and by subsequently transmitted the retrieved response to the mobile device 10.

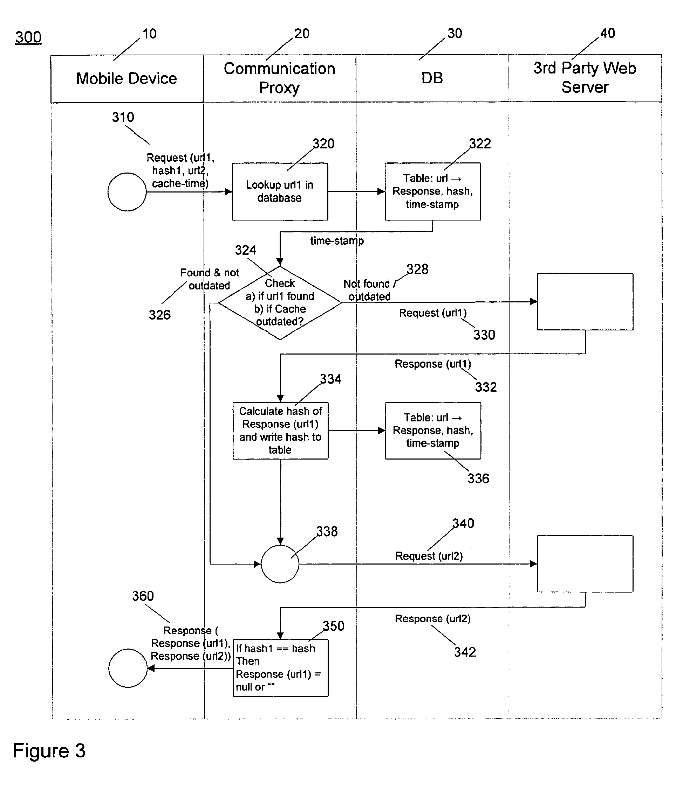

**Figure 3** shows an exemplary computer-implemented method 300, wherein in addition to the functionality shown with reference to Fig. 2, communication between a proxy 20 and a server 40, i.e. back-end or server-side communication is optimized.

The method 300 may comprise one or more of the following steps. It should be understood that one or more request, e.g. a bundle of requests may be processed in any order. Furthermore, one or more responses to a request may be processed in any order.

At 310, a request from a client 10 such as a mobile device is received at a proxy 20. The proxy 20 is coupled to a data storage device 30 such as a database. The request comprises at least a first address addressing a server 40, first hash data, a cache-time, and possibly at least one further address addressing the server 40 or another server. The first hash data may relate to the first address and/or data retrieved from said addressed server prior to the request. The first hash data are computed by calculating a checksum similar or equal to the checksum explained above with reference to Fig. 2. The cache-time may be determined by an application running on the mobile device 10. For example, content relating to weather data may have a different cache-time than content relating to a city list or a list of POIs used by a navigation system running on the mobile device 10. The cache-time may be a time period determined by the mobile device regarding to how long data cached on the mobile device is considered to be valid and therefore not outdated. If the cache-time of the mobile device for loaded data exceeds, the mobile device reloads corresponding data through a data request to the proxy 20.

At 320, after the proxy 20 has received the request from the mobile device 10, the proxy 20 looks up a table 322 in the data storage device 30. The table 322 may comprise at least a first address and/or data corresponding to the request.

At 324, the proxy 20 evaluates, by looking up the table in the data storage device 30, whether the first address is stored in the data storage device 30. If the first address is found or stored (i.e. already cached) in the data storage device 30, the proxy 20 further checks a time stamp of the stored first address. The time stamp is checked with respect to the addressed server 40 and the mobile device 10 from which the request is received. It is verified whether the cache-time of the mobile device and/or the time stamp of the address stored in the data storage device 30 are/is still valid or already outdated. Outdated may refer to a maximum time for the cached data on the mobile device and/or the cached address being exceeded. The time stamp may be determined by the server 40 indicating whether data corresponding to an address and being loaded and cached from a server 40 on the data storage device 30 is still valid or outdated. In case a time stamp for an address is exceeded, data loaded from a server 40 related to said address is reloaded by the proxy 20 and stored in the data storage device 30. Otherwise (i.e. the time stamp is still valid), in case of a data request from a mobile device 10, the requested data corresponding to the time stamped address need not to be loaded from the server 40, but can be rather directly transmitted from the proxy 20 having cached the corresponding data. Accordingly, efficiency of data requests is increased and expensive and time consuming communication between the proxy 20 and a server 40 can be avoided. Furthermore, load on the server 40 may be avoided or reduced.

If the first address is found in the data storage device 30 and if the cache-time (of the mobile device 10) for the first address is still valid (i.e. not outdated), then the proxy 20 transmits a null value or an empty string to the mobile device 10 (326). Transmitting a null value or an empty string to the mobile device 10 means that first response data already downloaded on the mobile device 10 with regard to the first address in a request prior to the request is still valid and need not to be updated or modified.

At 328, if the first address is not found or stored (i.e. not already cached) in the data storage device 30 or if the first address is outdated (i.e. the time stamp referring to the first address is exceeded), then the proxy 20 retrieves second response data from the server 40 being addressed by the first address.

After having retrieved the second response data, at 334, the proxy 20 computes second hash data based on the second response data, e.g. by using a checksum function similar or equal to the checksum function applied to compute the first hash data. At 336, the second hash data are stored in the data storage device 30 and at 338, the second hash data are collected at the proxy together with the second response data. In case the request comprise one or more further addresses, corresponding requests are performed (e.g. substantially in parallel) by the proxy 20, e.g. 340, 342.

At 350, after having finished all requests, the proxy 20 compares the second hash data to the first hash data. In case the second hash data is equal to the first hash data, the proxy 20 transmits a null value regarding to the first address to the mobile device 10. Otherwise, at 360, if the second hash data differs from the first hash data, the proxy 20 transmits the second response data and the second hash data to the mobile device 10. At least a part of the second response data then updates the first response data on the mobile device.

In a further exemplary aspect, the mobile device 10 has already pre-loaded data corresponding to a first address and corresponding first hash data, but the first address and the corresponding data are not yet loaded and stored in the data storage device 30 of the proxy 20 from a server 40. If the mobile device 10 sends a data request to the server 40 comprising the first address via the proxy 20 for said data the proxy stores the first address in the data storage device 30. Subsequently, the proxy 20 loads the requested data with the time-stamp from the server 40 and stores it in the data storage device 30 having said address. If the time stamp is different from the cache time for the pre-loaded data of the mobile device 10, the mobile device will be updated accordingly as described above.

As it is the case for the method as shown in Fig. 2, the method 300 may be automatically performed by the mobile device as an update and cache request attached to a user request from the mobile device 10 to the server 40. For the user request, a connection and access to the server 40 is however required such that this connection may be automatically exploit by the mobile device 10 for updating purposes as well as for optimizing the server-side communication between the proxy 20 and the server 40.

It should be understood that the methods 100, 200 and 300 described with reference to Figs. 1, 2 and 3, respectively may be combined.

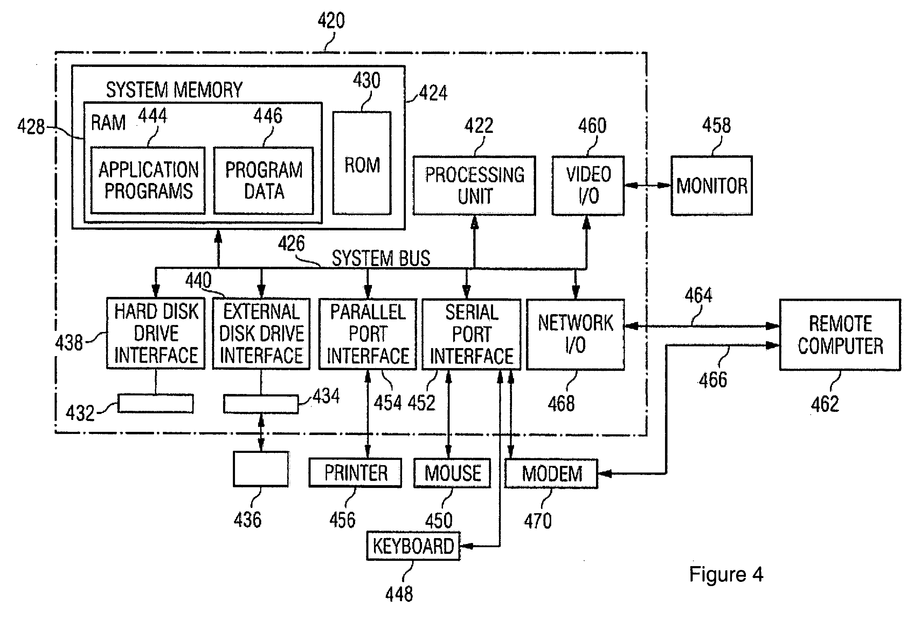

With reference to **Figure 4****,** an exemplary system for implementing the invention includes a general purpose computing device in the form of a conventional computing environment 420 (e.g. personal computer), including a processing unit 422, a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk 436 may be a magnetic disk for a magnetic disk driver or an optical disk such as a CD ROM for an optical disk drive. The hard disk drive 434 and external disk drive 434 are connected to the system bus 426 by a hard disk drive interface 438 and an external disk drive interface 440, respectively. The drives and their associated computer-readable media provide nonvolatile storage of computer readable instructions, data structures, program modules and other data for the personal computer 420. The data structures may include relevant data of the implementation of the computer-implemented method, system and computer program product to check updates of requested data when performing a request against a server in a communication network as described in more detail above. The relevant data may be organized in a database, for example a relational or object database.

Although the exemplary environment described herein employs a hard disk (not shown) and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 430 or RAM 428, including an operating system (not shown), one or more application programs 444, other program modules (not shown), and program data 446. The application programs 444 may include at least a part of the functionality as detailed in Figs. 1 to 3.

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 458 or other type of display device is also connected to the system bus 426 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computer environment 420 may operate in a networked environment using connections to one or more electronic devices. Fig. 4 depicts the computer environment networked with remote computer 462. The remote computer 462 may be another computing environment such as a server, a router, a network PC, a peer device or other common network node, and may include many or all of the elements described above relative to the computing environment 420. The logical connections depicted in Fig. 4 include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/O 468. When used in a WAN networking environment, the computing environment 420 may include a modem 470 or other means for establishing communications over the WAN 466. The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the insurance claim management evaluation method (described in more detail further below) may be resident on or accessible via the remote computer 462. The data may be stored for example in an object or a relation database. It will be appreciated that the network connections shown are exemplary and other means of establishing a communications link between the electronic devices may be used.

The above-described computing system is only one example of the type of computing system that may be used to implement the method to check updates of requested data when performing a request against a server in a communication network.

### List of Reference Numerals

- 10: client
- 20: proxy
- 30: data storage device
- 40: server
- 100: method for performing one or more requests and responses in parallel
- 110: request
- 120: request to proxy
- 130, 140: request to server
- 132, 142: response from server
- 134, 144: response collection
- 150: response from proxy
- 210: request
- 220: request to proxy
- 230, 240: request to server
- 232, 242: response from server
- 234: hash computation
- 236: collecting response
- 250: hash comparison
- 260: response to client
- 310: request
- 320, 322: lookup of first address
- 324: checking cache
- 326: found and not outdated
- 328: not found or outdated
- 330,340: request to server

- 332, 342: response from server
- 334: hash computation
- 336: storing response, hash, and time-stamp
- 338: collecting response
- 350: hash comparison
- 360: response to client
- 420: conventional computing environment
- 422: processing unit
- 424: system memory
- 426: system bus
- 428: random access memory (RAM)
- 430: read only memory (ROM)
- 432: hard disk drive
- 434: external disk drive
- 436: removable disk
- 438: hard disk drive interface
- 440: external disk drive interface
- 444: application program
- 446: program data
- 448: keyboard
- 450: mouse
- 452: serial port interface
- 454: parallel port interface
- 456: printer
- 458: monitor
- 460: video input/output
- 462: remote computer
- 464: local area network (LAN)
- 466: wide area network (WAN)
- 468: network I/O
- 470: a modem

## Claims

1. Computer-implemented method for checking updates of requested data when performing a data request across a network, the method comprising:
receiving (210) a data request from a client (10) at a proxy (20), the data request comprising at least one address of at least one server (40) and first hash data, wherein the first hash data are at least partially computed from first response data retrieved from the at least one server (40) prior to the data request;
in answer to the data request receiving (230, 232) second response data from the at least one server (40) at the proxy (20);
computing (234) second hash data from the second response data at the proxy (20); and
comparing (250) the first hash data with the second hash data at the proxy (20):
if the second hash data are equal to the first hash data, then transmitting (260) a null value to the client (10);
else if the second hash data differ from the first hash data, then transmitting (260) the second response data and the second hash data to the client (10).

2. Computer-implemented method according to claim 1, wherein
the first hash data comprise a first checksum calculated from at least a portion of content data of the first response data, and wherein
the second hash data comprise a second checksum calculated from at least a portion of content data of the second response data.

3. Computer-implemented method according to claim 1 or 2, wherein the data request further comprises a cache-time for the at least one address.

4. Computer-implemented method according to claim 3, the method further comprising:
after receiving (210, 310) the data request at the proxy (20), verifying (320, 322) storage of the at least one address in a data storage device (30) coupled to the proxy (20) and checking (324) the cache-time:
if the at least one address is found in the data storage device (30) and if the cache-time is not outdated, then transmit (326) the null value to the client (10),
else if the at least one address is not found or if the cache-time is outdated, then, in answer to the data request, further performing the steps of storing (334) the second hash data in the data storage device and updating (336) the cache-time for the at least one address.

5. Computer-implemented method according to claim 3 or 4, wherein the cache-time is configured by an application running on the client (10).

6. Computer-implemented method according to any one of claims 3 to 5, wherein a time-stamp is determined by the server (40) indicating whether data corresponding to the first address is still valid or outdated.

7. Computer-implemented method according to any one of claims 3 to 6, the method further comprising the step:
comparing the cache-time with the time-stamp; and
re-loading corresponding data from the server (40) on the proxy (20) if the time-stamp is older than the cache-time.

8. Computer-implemented method according to any one of the preceding claims, wherein the first address and the first hash data are automatically combined with at least one user request against the server (40) by an application running on the mobile device (10).

9. Computer-implemented method according to any one or the preceding claims, wherein the first hash data is pre-loaded in the mobile device.

10. Computer program product comprising computer readable instructions, which when loaded and run in a computer and/or computer network system, causes the computer system and/or the computer network system to perform operations according to a method of any one of the preceding claims.

11. Computer system for checking updates of requested data when performing a data request across a network, the system comprising:
a proxy (20) operable to:
receive a data request from a client (10), the data request comprising at least one address of at least one server (40) and first hash data, wherein the first hash data are at least partially computed from first response data retrieved from the at least one server prior to the data request;
in answer to the data request receive second response data from the at least one server (40);
compute second hash data from the second response data; and
compare the first hash data with the second hash data:
if the second hash data are equal to the first hash data, then transmit a null value to the client (10);
else if the second hash data differ from the first hash data, then transmit the second response data and the second hash data to the client (10).

12. Computer system according to claim 11, wherein
the first hash data comprise a first checksum calculated from at least a portion of content data of the first response data, and wherein
the second hash data comprise a second checksum calculated from at least a portion of content data of the second response data.

13. Computer system according to claim 11 or 12, wherein the data request further comprises a cache-time for the at least one address.

14. Computer system according to claim 13, wherein the proxy (20) is further operable to:
after receiving the data request, verify storage of the at least one address in a data storage device (30) coupled to the proxy (20) and check the cache-time:
if the at least one address is found in the data storage device (30) and if the cache-time is not outdated, then transmit the null value to the client (10),
else if the at least one address is not found or if the cache-time is outdated, then, in answer to the data request, further perform the steps: store the second hash data in the data storage device (30) and update the cache-time for the at least one address.

15. Computer system according to claim 13 or 14, wherein the cache-time is configured by an application running on the client (10).

16. Computer system according to any one of claims 13 to 15, wherein a time-stamp is determined by the server (40) indicating whether data corresponding to the first address is still valid or outdated.

17. Computer system according to any one of claims 13 to 16, wherein the proxy (20) is further operable to:
compare the cache-time with the time-stamp; and
re-Ioad corresponding data from the server (40) on the proxy (20) if the time-stamp is older than the cache-time.

18. Computer system according to any one of the claims 11 to 17, wherein the first address and the first hash data are automatically combined with at least one user request against the server (40) by an application running on the mobile device (10).

19. Computer system according to any one of the claims 11 to 18, wherein the first hash data is pre-loaded in the mobile device.
